**Europäisches Patentamt**

**European Patent Office**

**Office européen des brevets**

(19)

(11) Veröffentlichungsnummer : **0 403 806 B1**

(12)

# EUROPÄISCHE PATENTSCHRIFT

(45) Veröffentlichungstag der Patentschrift :
**24.02.93 Patentblatt 93/08**

�[51] Int. Cl.⁵ : **F04D 15/00, F24D 19/10, G01K 17/12**

(21) Anmeldenummer : **90109566.1**

(22) Anmeldetag : **19.05.90**

(30) Priorität : **21.06.89 DE 3920185**

(43) Veröffentlichungstag der Anmeldung :
**27.12.90 Patentblatt 90/52**

(45) Bekanntmachung des Hinweises auf die
Patenterteilung :
**24.02.93 Patentblatt 93/08**

(84) Benannte Vertragsstaaten :
**AT BE CH DE DK ES FR GB GR IT LI LU NL SE**

(56) Entgegenhaltungen :
**CH-A- 458 933**
**CH-A- 667 328**
**FR-A- 2 305 807**
**US-A- 4 509 679**

(54) **Kreiselpumpe oder Lüfter.**

(73) Patentinhaber : **WILO GmbH**
**Nortkirchenstrasse 100**
**W-4600 Dortmund 30 (DE)**

(72) Erfinder : **Greitzke, Stephan, Dr.**
**Pottenkamp 22**
**W-4600 Dortmund 30 (DE)**

(74) Vertreter : **Cohausz & Florack Patentanwälte**
**Postfach 14 01 61 Schumannstrasse 97**
**W-4000 Düsseldorf 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Kreiselpumpe oder einen Lüfter mit Elektromotor zum Fördern eines temperierten Fluids, insbesondere Spaltrohrpumpe für eine Heizungsanlage, wobei Fühler zum Erfassen der Drehzahl, der elektrischen Stromstärke und/oder des Differenzdruckes angeordnet sind, um den Volumenstrom des Fluids zu ermitteln.

Aus den europäischen Patentanmeldungen EP-A-015068A1 und EP-A-0226858A1 ist es bekannt, die Förderhöhe einer Pumpe durch Verändern der Stromzufuhr entsprechend an der Pumpe gemessenen Werten zu regeln. Hierbei werden Drehzahl und Stromstärke direkt am Elektromotor der Pumpe gemessen.

Andere, aus der Praxis bekannte Wärmemengenzähler erfassen zur Regelung der Pumpe den geförderten Volumenstrom mittels Flügelrad. Diese weisen aufgrund von Verschmutzung und Alterungserscheinungen eine geringe Zuverlässigkeit bzw. Genauigkeit auf. Insbesondere müssen derartige Geräte zusätzlich in den Rohrkreislauf an geeigneter Stelle eingebracht werden.

Aufgabe der Erfindung ist es dagegen, eine Kreiselpumpe oder einen Lüfter der eingangs genannten Art zu schaffen, die bzw. der bei einfacher Konstruktion und Handhabung mit hoher Genauigkeit und hoher Zuverlässigkeit regelbar ist.

Diese Aufgabe wird erfindungsgemäß dadurch gelöst, daß mindestens ein Fühler zum Erfassen der Temperatur des Fluids angeordnet ist, dessen Meßwerte zusammen mit den Meßwerten der übrigen Fühler einem elektronischen Rechner eingegeben werden, um die durchgesetzte Wärmenmenge zu berechnen und auszugeben, und daß der Rechner von einer Elektronik gebildet ist, die in einem Modul angeordnet ist, das lösbar am Motorengehäuse befestigt ist.

Hierdurch kann die Pumpe oder der Lüfter zusätzlich oder alternativ die Funktion eines Wärmemengenzählers übernehmen, d.h. es kann die Wärmeleistung oder die Wärmemenge gemessen, gezählt, gespeichert und ausgegeben werden.

Eine im Rohrkreislauf vorhandene Umwälzpumpe ist mit einer Elektronikschaltung ausgestattet. Diese ermittelt aus den für den Betriebspunkt der Pumpe charakteristischen Größen (Drehzahl, Strom und-/oder Differenzdruck) die gesuchte Maßgröße des Volumenstroms. Der Zusammenhang zwischen diesen charakteristischen Größen kann durch in der Elektronik abgespeicherte Kennlinienfelder gefunden werden. Zusammen mit der im Vor- bzw. Rücklauf mittels Temperatursensoren gemessenen Medientemperatur, berechnet eine interne Rechenschaltung, die als P oder kundenspezifische Schaltung ausgelegt sein kann, die aktuelle Wärmeleistung und durch Aufsummierung die durchgesetzte Wärmemenge.

Die Anzeige der Wärmeleistung und der Wärmemenge erfolgt entweder direkt mittels einer alphanumerischen Anzeige oder über eine bekannte analoge oder digitale Schnittstelle. Die Erfassung der Pumpendrehzahl kann insbesondere über mindestens einen im radialen Abstand zur Läuferachse im Läuferrad befindlichen Magneten mit gegenüberliegenden Empfänger erfolgen. Der erforderliche externe Temperatursensor überträgt die Signale auf leitungsgebundenen Wegen oder optisch, akustisch oder über ein anderes Medium.

Die aktuelle Wärmemenge wird in einem in der Schaltung vorhandenen nichtflüchtigen Speicher in zeitäquidistanten Meßintervallen abgespeichert. Dieser kann zu Diagnosezwecken und/oder zur Auswertung des zeitabhängigen Wärmeverbrauchs an der Anzeige oder via Schnittstelle kontinuierlich ausgelesen werden. Die gesamte Schaltung kann entweder direkt an der Pumpe angeordnet werden, wodurch sich besonders einfache Übertragungswege für Spannung, Strom, Drehzahl und Temperaturerfassung ergeben, oder über Verbindlungsleitungen von der Pumpe entfernt angebracht sein. Die Aufgabe der Pumpenregelung kann vorteilhaft vom Rechenwerk ausgeführt werden. Ebenso kann via Schnittstelle der Betriebspunkt der Pumpe eingestellt werden, und es können neben Wärmeleistung und Wärmemenge auch die übrigen Betriebsgrößen übertragen werden.

Da der Rechner von einer Elektronik gebildet ist, die in oder am Pumpengehäuse befestigt ist, werden sowohl die Konstruktion und Montage der Pumpe vereinfacht als auch die Gesamtabmessungen verringert. Besonders vorteilhaft ist es hierbei, wenn die Elektronik in einem insbesondere kastenförmigen Modul angeordnet ist, das lösbar am Motorengehäuse befestigt ist.

Besonders vorteilhaft ist es, wenn der Rechner von einer Elektronik gebildet ist, die in oder am Pumpengehäuse befestigt ist. Hiedurch werden Konstruktion und Montage vereinfacht als auch die Gesamtabmessungen verringert. Besonders vorteilhaft ist es hierbei, wenn die Elektronik in einem insbesondere kastenförmigen Modul angeordnet ist, das lösbar am Motorengehäuse befestigt ist.

Alternativ kann aber auch der Rechner von einer Elektronik gebildet sein, die entfernt von der Pumpe angebracht und über eine Leitung verbunden ist.

Eine besondes einfache und sichere Konstruktion wird dann geschaffen, wenn der Temperaturfühler an der Pumpensaug- oder -druckseite angeordnet ist. Alternativ kann hierzu aber auch der Temperaturfühler im Pumpen- oder Motorengehäuse angeordnet sein.

Besonders vorteilhaft ist es, wenn ein Temperaturfühler im Vorlauf und ein Temperaturfühler im Rücklauf einer Heizungsanlage angeordnet ist. Von großem Vorteil ist es auch, wenn die ermittelten Werte durchgesetzter Wärmemenge und/oder Wärmeleistung zur Drehzahl, Temperaturen, Stromstärke, Förderstrom, Leistungsaufnahme auf einem Display angezeigt werden, das an der Pumpe oder davon entfernt angeordnet ist.

Vorteilhafterweise wird vorgeschlagen, daß der Rechner einen Wärmemengenzähler bildet, der die Werte aufaddiert. Auch kann der Rechner die aktuelle Wärmeleistung zu einem bestimmten Zeitpunkt ausgeben. Besonders vorteilhaft ist es, wenn der Rechner das Leistungsprofil über einen bestimmten Zeitraum speichert und ausgibt.

Ein Ausführungsbeispiel der Erfindung ist in den Zeichnungen dargestellt und wird im folgenden näher beschrieben. Es zeigen

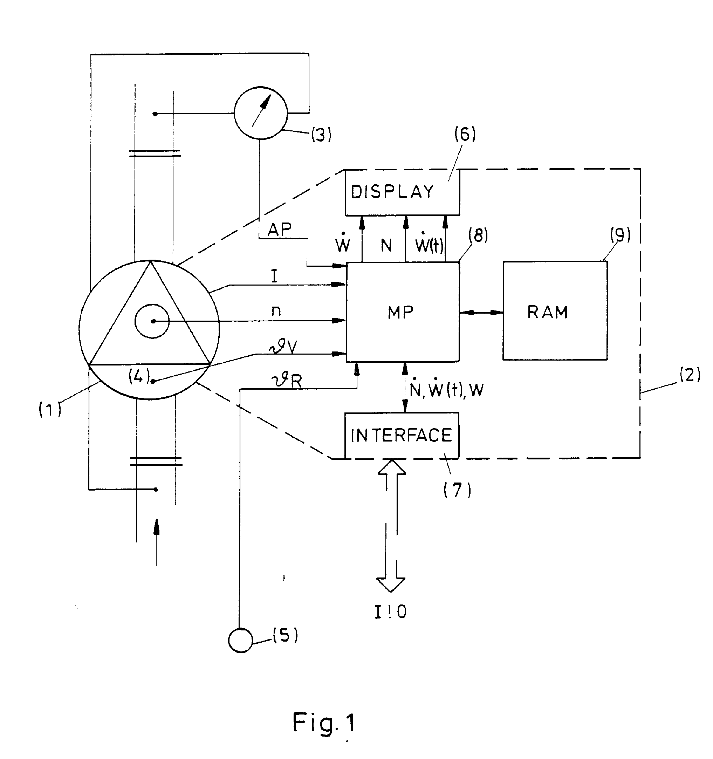

Figur 1 die erfindungsgemäße Pumpe als Schaltbild,

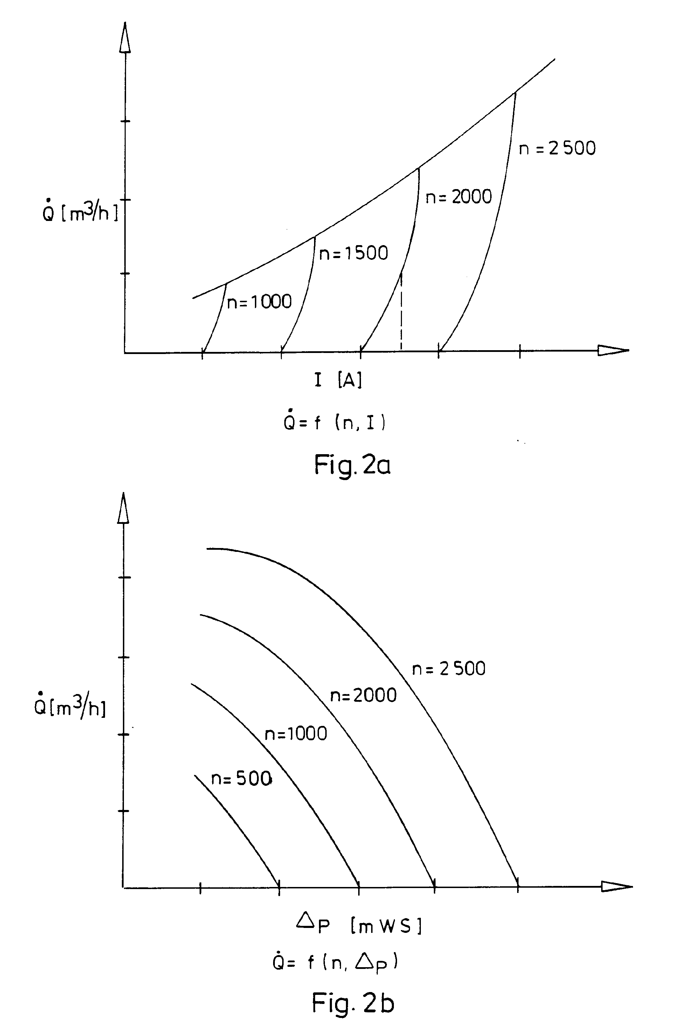

Figur 2a und 2b den Zusammenhang zwischen den Pumpenwerten durch in der Elektronik abgespeicherte Kennlinienfelder und

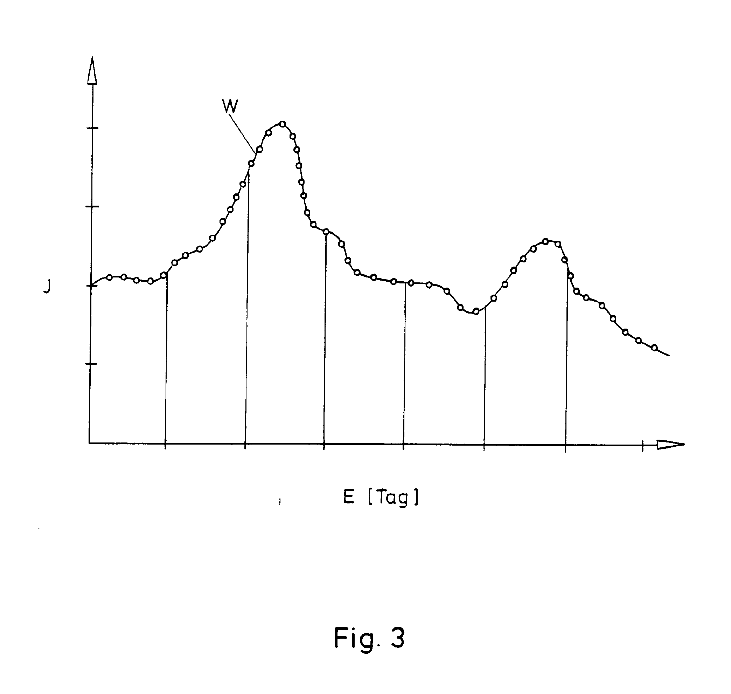

Figur 3 den zeitlichen Verlauf der Wärmeleistung.

Eine Kreiselpumpe oder ein Lüfter 1 mit integriertem Elektromotor, insbesondere eine Spaltrohrpumpe z.B. für eine Heizungsanlage weist eine Elektronikschaltung 2 auf, die innerhalb des Pumpen- und/oder Motorenhäuses oder außen am Gehäuse, insbesondere lösbar innerhalb eines kastenförmigen Moduls befestigt. Der Rechner 8 der Elektronikschaltung erhält über Fühler Angaben über die Drehzahl, die elektrische Stromstärke und/oder über den Differenzdruck, um den Volumenstrom des zu pumpenden Mediums zu ermitteln.

An einem Meßort wird an der Pumpe oder dem Elektromotor die Drehzahl des Läufers (Rotors) gemessen. Dies kann insbesondere bei einer Spaltrohrpumpe durch im Laufrad angeordnete Permanentmagnete geschehen, die an ortsfesten Meßspulen vorbeilaufen, wie dies in der nicht vorveröffentlichten deutschen Patentanmeldung P 35 38 225.2 beschrieben ist. Dieser hierdurch erhaltene Drehzahlmeßwert wird einer Vorrichtung über eine elektrische Leitung geliefert. In diese Vorrichtung geht ferner ein Strommeßwert ein, der über eine elektrische Leitung von einer Meßvorrichtung erhalten wird. Diese Meßvorrichtung liegt in oder an der elektrischen Leitung, die die Stromversorgung für den Elektromotor bildet. Dieser Strommeßwert stellt die Stromstärke dar, so daß dieser Wert angibt, wieviel Strom der Elektromotor aufnimmt.

Die Vorrichtung bildet aus dem Drehzahlmeßwert und dem Strommeßwert einen einzigen Wert, der durch eine elektrische Leitung einem Regler zugeführt wird. Dieser dem Regler zugeführte Wert kann aus dem Drehzahlmeßwert und dem Strommeßwert dadurch gebildet werden, daß Drehzahlund Stromstärkenmeßwert addiert oder voneinander subtrahiert werden. Es kann hier aber auch zu anderen Arten der Beeinflussung eines Wertes durch den anderen geschehen. Insbesondere kann das Verhältnis beider Werte durch die Division oder Mulitplikation gebildet werden. Durch den Wert der Förderhöhe ist der Stromstärkenmeßwert veränderbar. Insbesondere geht bei kleinen Förderhöhen der Stromstärkenmeßwert vergrößert und bei großen Förderhöhen der Stromstärkenmeßwert verkleinert ein. Bei kleinen Förderhöhen soll also der Stromstärkenmeßwert stärker eingehen als bei großen Förderhöhen.

In den Regler geht ferner ein Sollwert ein, der durch eine Vorrichtung, insbesondere einem Potentiometer einstellbar ist. Der Regler vergleicht den Sollwert mit dem durch die Leitung eingehenden Wert als Istwert und steuert über eine elektrische Leitung einen Potentiometer, der sich in der Leitung zwischen der Meßvorrichtung und der Stromquelle befindet. Hierdurch wird die Spannung am Elektromotor verändert. Statt eines Potentiometers kann aber auch eine andere Regelvorrichtung in der Leitung angeordnet sein, um in einer anderen Weise Einfluß auf die Stromzufuhr zum Elektromotor zu nehmen, um die Drehzahl des Elektromotors zu ändern. So können Stromstärke, Frequenz oder Stromdauer regelbar sein.

Zusätzlich ist noch mindestens ein Temperaturfühler vorgesehen, der als interner Fühler 4 im Pumpen- oder Motorengehäuse, insbesondere an der Pumpensaug- oder druckseite oder als externer Temperaturfühler 5 an einer angeschlossenen Leitung, insbesondere im Vorlauf oder Rücklauf einer Heizungsanlage befestigt ist. Es kann auch ein Temperaturfühler im Vorlauf und ein Temperaturfühler im Rücklauf angeordnet sein.

Die Elektronikschaltung 2 ermittelt aus den für den Betriebspunkt der Pumpe charakteristischen Großen Drehzahlen, Strom I und/oder Differenzdruck $\Delta$p die gesuchte Maßgröße $\dot{Q}$ [m³/4]

$$\dot{Q} = f(n, I, \Delta p) \quad \text{(Gleichung 2).}$$

Der Zusammenhang zwischen Q, n, I und $\Delta$p kann durch in der Elektronik abgespeicherte Kennlinienfelder gefunden werden (s.Bild 2a, 2b). Zur Vereinfachung können aus Gleichung 2 jeweils zwei Meßgrößen ausgewählt werden. Die Druckmessung erfolgt dann über herkömmliche Differenzdruckmeßgeräte 3 zu

$$\dot{Q} = f(n, I) \quad \text{bzw.}$$
$$\dot{Q} = f(n, \Delta p).$$

Zusammen mit den Temperatursensoren 4, 5 gemessenen Medientemperatur berechnet die interne Rechenschaltung 8, die als $\mu$P oder kundenspezifische Schaltung ausgelegt sein kann, die aktuelle Wärmeleistung $\dot{W}$ und durch Aufsummierung die durchgesetzte Wärmemenge W (W = Kt·($\vartheta_V$-$\vartheta_R$)·$\dot{Q}_j$W = $\Sigma\dot{W}\Delta$t). Die aktuelle Wärmemenge W wird in einem in der Schaltung vorhandenen nichtflüchtigen Speicher 9 in zeitäquidistanten Meßintervallen abgespeichert. Dieser kann zu Diagnosezwecken und/oder zur Auswertung des zeitabhängigen Wärmeverbrauchs an der Anzeige 6 oder via Schnittstelle 7 kontinuierlich ausgelesen werden. Es ergibt sich danach ein Verlauf gemäß Bild 3.

- Der Rechner bildet somit einen Wärmemengenzähler (kWh),
- zeigt an die aktuelle Leistung zu einem bestimmten Zeitpunkt (kW) und
- speichert und gibt an das Leistungsprofil (kW über Zeitraum).

Der erforderliche externe Temperatursensor 10 überträgt die Signale auf leitungsgebundenen Wegen (Leitung, 220V-Netz-Übertragung), optisch, akustisch oder über ein anderes Medium.

**Patentansprüche**

1. Kreiselpumpe (1) oder Lüfter mit Elektromotor zum Fördern eines temperierten Fluids, insbesondere Spaltrohrpumpe für eine Heizungsanlage, wobei Fühler zum Erfassen der Drehzahl, der elektrischen Stromstärke und/oder des Differenzdruckes angeordnet sind, um den Volumenstrom des Fluids zu ermitteln, **dadurch gekennzeichnet,** daß mindestens ein Fühler (4,5) zum Erfassen der Temperatur des Fluids angeordnet ist, dessen Meßwerte zusammen mit den Meßwerten der übrigen Fühler einem elektronischen Rechner (2,8,9) eingegeben werden, um die durchgesetzte Wärmenmenge zu berechnen und auszugeben, und daß der Rechner (2,8,9) von einer Elektronik gebildet ist, die in einem Modul angeordnet ist, das lösbar am Motorengehäuse befestigt ist.

2. Kreiselpumpe oder Lüfter nach Anspruch 1, **dadurch gekennzeichnet,** daß der Rechner (2,8,9) von einer Elektronik gebildet ist, die entfernt von der Pumpe (1) angebracht und über eine Leitung verbunden ist.

3. Kreiselpumpe oder Lüfter nach einem der vorherigen Ansprüche, **dadurch gekennzeichnet,** daß der Temperaturfühler (4) an der Pumpensaug- oder -druckseite angeordnet ist.

4. Kreiselpumpe oder Lüfter nach einem der vorherigen Ansprüche, **dadurch gekennzeichnet,** daß der Temperaturfühler (4) im Pumpen- oder Motorengehäuse angeordnet ist.

5. Kreiselpumpe oder Lüfter nach einem der vorherigen Ansprüche, **dadurch gekennzeichnet,** daß ein Temperaturfühler (5) im Vorlauf und ein Temperaturfühler im Rücklauf einer Heizungsanlage angeordnet ist.

6. Kreiselpumpe oder Lüfter nach einem der vorherigen Ansprüche, **dadurch gekennzeichnet,** daß die ermittelten Werte durchgesetzter Wärmemenge und/oder Wärmeleistung zur Drehzahl, Temperaturen, Stromstärke, Förderstrom, Leistungsaufnahme auf einem Display (6) angezeigt werden, das an der Pumpe (1) oder davon entfernt angeordnet ist.

7. Kreiselpumpe oder Lüfter nach einem der vorherigen Ansprüche, **dadurch gekennzeichnet,** daß der Rechner (2,8,9) einen Wärmemengenzähler bildet, der die Werte aufaddiert.

8. Kreiselpumpe oder Lüfter nach einem der vorherigen Ansprüche, **dadurch gekennzeichnet,** daß der Rechner (2,8,9) die aktuelle Wärmeleistung zu einem bestimmten Zeitpunkt ausgibt.

9. Kreiselpumpe oder Lüfter nach einem der vorherigen Ansprüche, **dadurch gekennzeichnet,** daß der Rechner (2,8,9) das Leistungsprofil über einen bestimmten Zeitraum speichert und ausgibt.

**Claims**

1. A centrifugal pump (1) or fan with electric motor for the delivery of a tempered fluid, more particularly a canned pump for a heating installation, sensors being provided to detect the speed, the electric current intensity and/or the differential pressure in order to determine the volumetric flow of the fluid, characterized in that at least one sensor (4, 5) is provided for determining the temperature of the fluid, whose measured values are inputted together with the measured values of the other sensors into an electronic computer (2, 8, 9) to compute and output the throughputted quantity of heat, the computer (2, 8, 9) being formed by an electronic system disposed in a module releasably attached to the motor casing.

2. A centrifugal pump or fan according to claim 1, characterized in that the computer (2, 8, 9) is formed by an electronic system which is disposed remote from the pump (1) and connected via a cable.

3. A centrifugal pump or fan according to one of the preceding claims, characterized in that the temperature sensor (4) is disposed on the intake or delivery side of the pump.

4. A centrifugal pump or fan according to one of the preceding claims, characterized in that the temperature sensor (4) is disposed in the pump or motor casing.

5. A centrifugal pump or fan according to one of the preceding claims, characterized in that a temperature sensor is disposed in the outflow and a temperature sensor in the return flow of a heating installation.

6. A centrifugal pump or fan according to one of the preceding claims, characterized in that the determined values of throughputted quantity of heat and/or heat output are displayed for recording speed, temperature, current intensity, delivery flow and power consumption on a display (6) which is disposed on the pump (1) or remote therefrom.

7. A centrifugal pump or fan according to one of the preceding claims, characterized in that the computer (2, 8, 9) forms a calorimeter which totals up the values.

8. A centrifugal pump or fan according to one of the preceding claims, characterized in that the computer (2, 8, 9) outputs the actual heat performance at a predetermined time.

9. A centrifugal pump or fan according to one of the preceding claims, characterized in that the computer (2, 8, 9) stores and outputs the performance profile over a predetermined period.

## Revendications

1. Pompe centrifuge (1) ou ventilateur à moteur électrique pour le transport d'un fluide tempéré, en particulier pompe à moteur à gaine pour une installation de chauffage, des capteurs pour déterminer la vitesse de rotation, l'intensité du courant électrique et/ou la pression différentielle étant disposés pour déterminer le courant volumique du fluide, caractérisée en ce qu'au moins un capteur (4, 5) est disposé pour déterminer la température du fluide, dont les valeurs mesurées sont envoyées avec les valeurs mesurées des autres capteurs à un calculateur électronique (2, 8, 9) pour calculer et exprimer la quantité de chaleur traversante, et que le calculateur (2, 8, 9) est formé par une électronique qui est disposée dans un module qui est fixé de manière amovible au carter du moteur.

2. Pompe centrifuge ou ventilateur selon la revendication 1, caractérisée en ce que le calculateur (2, 8, 9) est formé par une électronique qui est disposée éloignée de la pompe (1) et est reliée par une ligne.

3. Pompe centrifuge ou ventilateur selon l'une des revendications précédentes, caractérisée en ce que le capteur de température (4) est disposé du côté aspiration ou dépression de la pompe.

4. Pompe centrifuge ou ventilateur selon l'une des revendications précédentes, caractérisée en ce que le capteur de température (4) est disposé dans le carter de la pompe ou du moteur.

5. Pompe centrifuge ou ventilateur selon l'une des revendications précédentes, caractérisée en ce qu'un capteur de température (5) est disposé dans l'aller et un capteur de température dans le retour d'une installation de chauffage.

6. Pompe centrifuge ou ventilateur selon l'une des revendications précédentes, caractérisée en ce que les valeurs détectées de la quantité de chaleur traversante et/ou de la puissance calorifique sont indiquées sur un affichage (6) qui est disposé sur la pompe (1) ou écarté de celle-ci, pour la vitesse de rotation, les températures, l'intensité de courant, le débit de transport, la puissance absorbée.

7. Pompe centrifuge ou ventilateur selon l'une des revendications précédentes, caractérisée en ce que le calculateur (2, 8, 9) comporte un compteur de quantités de chaleur qui additionne les valeurs.

8. Pompe centrifuge ou ventilateur selon l'une des revendications précédentes, caractérisée en ce que le calculateur (2, 8 , 9) sort la puissance calorifique instantanée à un instant déterminé.

9. Pompe centrifuge ou ventilateur selon l'une des revendications précédentes, caractérisée en ce que le calculateur (2, 8, 9) mémorise et sort le profil de puissance pendant une période de temps déterminée.

Fig. 1

$$\dot{Q} = f(n, I)$$

Fig. 2a

$$\dot{Q} = f(n, \triangle_P)$$

Fig. 2b

Fig. 3